(19) **Europäisches Patentamt European Patent Office Office européen des brevets**

(11) **EP 4 637 143 A1**

(12) **EUROPEAN PATENT APPLICATION**

(43) Date of publication:
**22.10.2025 Bulletin 2025/43**

(21) Application number: **24315164.4**

(22) Date of filing: **15.04.2024**

(51) International Patent Classification (IPC):
**H04N 19/119** (2014.01)   **H04N 19/593** (2014.01)
**H04N 19/11** (2014.01)   **H04N 19/105** (2014.01)

(52) Cooperative Patent Classification (CPC):
**H04N 19/105; H04N 19/11; H04N 19/119;**
**H04N 19/176; H04N 19/593**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **Rath, Gagan Bihari**
**35000 RENNES (FR)**
• **Radosavljevic, Milos**
**35000 RENNES (FR)**
• **Dumas, Thierry**
**35700 RENNES (FR)**
• **Reuze, Kevin**
**35700 RENNES (FR)**

(74) Representative: **Rittner, Karsten**
**Rittner & Partner**
**Patentanwälte mbB**
**Schiffgraben 17**
**30159 Hannover (DE)**

(54) **INTRA PREDICTION WITH BLOCK SPLIT**

(57)    An example device may: obtain a block with a width and a height that are not equal; determine an intra prediction mode applicable to the block; determine a partition type of the block based on the width and the height of the block; partition, based on the partition type, the block into a first partition of the block and a second partition of the block, wherein the first partition of the block is to be predicted using a horizontal or vertical intra prediction mode; predict the first partition of the block using the horizontal or vertical intra prediction mode and the second partition of the block using the intra prediction mode (e.g., which is not the horizontal or vertical intra prediction mode); and decode the block based on the first partition of the block and the second partition of the block.

FIG. 9

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

Systems, devices, and methods are described herein for intra prediction with block split.

In examples, a device for video decoding (e.g., a video decoder) may obtain a video block. The width of the video block and the height of the video block may not be equal. The device may determine an intra prediction mode that is applicable to the video block. The device may determine a partition type of the video block based on the width of the video block and the height of the video block (e.g., the partition type of the video block may be determined to be a horizontal partition type based on the height of the video block being greater than the width of the video block). The device may partition, based on the partition type, the video block into a first partition of the video block and a second partition of the video block (e.g., the first partition of the video block may be predicted using a horizontal or vertical intra prediction mode). The device may predict the first partition of the video block using the horizontal or vertical intra prediction mode and the second partition of the video block using the intra prediction mode that is applicable to the video block. The intra prediction mode that is applicable to the video block may not be the horizontal or vertical intra prediction mode. The device may decode the video block based on the first partition of the video block and the second partition of the video block.

In examples, the device may receive a partition indicator that indicates that the video block (e.g., that has the unequal width and height) is to be partitioned based on the width of the video block and the height of the video block. The device may receive a prediction scheme indicator that indicates whether a vertical intra prediction mode or a horizontal intra prediction mode is to be used to predict the first partition of the video block. The first partition of the video block may be predicted according to the prediction scheme indicator. For example, if the prediction scheme indicator indicates that a vertical intra prediction mode is to be used to predict the first partition of the video block, the device may predict the first partition of the video block using the vertical intra prediction mode. If the prediction scheme indicator indicates that a horizontal intra prediction mode is to be used to predict the first partition of the video block, the device may predict the first partition of the video block using the horizontal intra prediction mode.

In examples, the device may determine, based on the partition type of the video block, whether a vertical intra prediction mode or a horizontal intra prediction mode is to be used to predict the first partition of the video block. The first partition of the video block may be predicted according to the determination of whether the vertical intra prediction mode or the horizontal intra prediction mode is to be used to predict the first partition of the video block. For example, if the partition type of the video block is a vertical partition type, the device may predict the first partition of the video block using the vertical intra prediction mode. If the partition type of the video block is a horizontal partition type, the device may predict the first partition of the video block using the horizontal intra prediction mode.

The device may determine that one of the following: template based intra prediction (TIMD), decoder side intra mode derivation (DIMD), multiple reference lines (MRL), matrix based intra prediction (MIP), most probable modes (MPM), or template-based multiple reference lines (TMRL) is enabled for the video block. The intra prediction mode that is applicable to the video block may be determined based on the enabled one of the TIMD, DIMD, MRL, MIP, MPM, or TMRL. For example, the device may determine that TIMD is enabled for the video block and determine an intra prediction mode for the video block based on TIMD. The device may predict the first partition of the video block using a vertical/horizontal intra prediction mode and the second partition of the video block using the intra prediction mode that is determined using TIMD.

In some examples, only a vertical intra prediction mode may be permitted for the first partition of the video block, and the first partition of the video block may be predicted using the vertical intra prediction mode.

In examples, the device may determine a prediction of the video block based on the prediction of the first partition of the video block and the prediction of the second partition of the video block. For example, the prediction of the video block may be a simple average or a weighted average of the prediction of the first partition of the video block and the prediction of the second partition of the video block. The device may decode a residual coefficient associated with the video block. The device may apply the decoded residual coefficient to the prediction of the video block. The video block may be partitioned symmetrically into the first partition and the second partition of the video block. The video block may be partitioned asymmetrically into the first partition and the second partition of the video block.

In examples, a device for video encoding (e.g., a video encoder) may obtain a video block. The width of the video block and the height of the video block may not be equal. The device may determine an intra prediction mode that is applicable to the video block. The device may determine a partition type of the video block based on the width of the video block and the height of the video block (e.g., the partition type of the video block may be determined to be a horizontal partition type based on the height of the video block being greater than the width of the video block). The device may partition, based on the partition type, the video block into a first partition of the video block and a second partition of the video block (e.g., the first partition of the video block may be predicted using a horizontal or vertical intra prediction mode). The device may predict the first partition of the video block using the horizontal or vertical intra prediction mode and the second partition of the video block using the intra prediction mode that is applicable to the video block. The intra prediction mode that is applicable to the video block may not be the horizontal or vertical intra prediction mode. The device may encode the video block based on the first partition of the video block and the second partition of the video block.

In examples, the device may send a partition indicator that indicates that the video block (e.g., that has the unequal width and height) is to be partitioned based on the width of the video block and the height of the video block. The device may send a prediction scheme indicator that indicates whether a vertical intra prediction mode or a horizontal intra prediction mode is to be used to predict the first partition of the video block. The first partition of the video block may be predicted according to the prediction scheme indicator. For example, if the prediction scheme indicator indicates that a vertical intra prediction mode is to be used to predict the first partition of the video block, the device may predict the first partition of the video block using the vertical intra prediction mode. If the prediction scheme indicator indicates that a horizontal intra prediction mode is to be used to predict the first partition of the video block, the device may predict the first partition of the video block using the horizontal intra prediction mode.

In examples, the device may determine, based on the partition type of the video block, whether a vertical intra prediction mode or a horizontal intra prediction mode is to be used to predict the first partition of the video block. The first partition of the video block may be predicted according to the determination of whether the vertical intra prediction mode or the horizontal intra prediction mode is to be used to predict the first partition of the video block. For example, if the partition type of the video block is a vertical partition type, the device may predict the first partition of the video block using the vertical intra prediction mode. If the partition type of the video block is a horizontal partition type, the device may predict the first partition of the video block using the horizontal intra prediction mode.

The device may determine that one of the following: TIMD, DIMD, MRL, MIP, MPM, or TMRL is enabled for the video block. The intra prediction mode that is applicable to the video block may be determined based on the enabled one of the TIMD, DIMD, MRL, MIP, MPM, or TMRL. For example, the device may determine that TIMD is enabled for the video block and determine an intra prediction mode for the video block based on TIMD. The device may predict the first partition of the video block using a vertical/horizontal intra prediction mode and the second partition of the video block using the intra prediction mode that is determined using TIMD.

In some examples, only a vertical intra prediction mode may be permitted for the first partition of the video block, and the first partition of the video block may be predicted using the vertical intra prediction mode.

In examples, the device may determine a prediction of the video block based on the prediction of the first partition of the video block and the prediction of the second partition of the video block. For example, the prediction of the video block may be a simple average or a weighted average of the prediction of the first partition of the video block and the prediction of the second partition of the video block. The video block may be partitioned symmetrically into the first partition and the second partition of the video block. The video block may be partitioned asymmetrically into the first partition and the second partition of the video block.

In examples, the prediction of the first partition of the video block using the horizontal or vertical intra prediction mode, and the second partition of the video block using the intra prediction mode that is applicable to the video block may be evaluated against a prediction of the video block without a partition. The device may determine that the first prediction is to be used to encode the video block. The device may send a partition indicator that indicates that the video block (e.g., that has the unequal width and height) is to be partitioned based on the width of the video block and the height of the video block.

**BRIEF DESCRIPTION OF THE DRAWINGS**

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 is a diagram showing an example block-based video encoder.

FIG. 3 is a diagram showing an example video decoder.

FIG. 4 is a diagram showing an example of a system in which various aspects and examples may be implemented.

FIG. 5 illustrates an example of division of WxH block, e.g. H = 4 and W = 8.

FIG. 6 illustrates an example of division of WxH block, e.g. H = 16 and W = 32.

FIG. 7 illustrates an example block split in spatial geometric partitioning mode (SGPM).

FIG. 8 illustrates an example template (e.g., one used in SGPM to derive the SGPM candidate list).

FIG. 9 illustrates examples of block splits when the width of the block is greater than the height of the block.

FIG. 10 illustrates examples of block splits when the height of the block is greater than the width of the block.

FIG. 11 illustrates examples of asymmetric block splits when the width of the block is greater than the height of the block.

FIG. 12 illustrates examples of asymmetric block splits when the height of the block is greater than the width of the block.

## DETAILED DESCRIPTION

A detailed description of illustrative embodiments will now be described with reference to the various Figures. Although this description provides a detailed example of possible implementations, it should be noted that the details are intended to be exemplary and in no way limit the scope of the application.

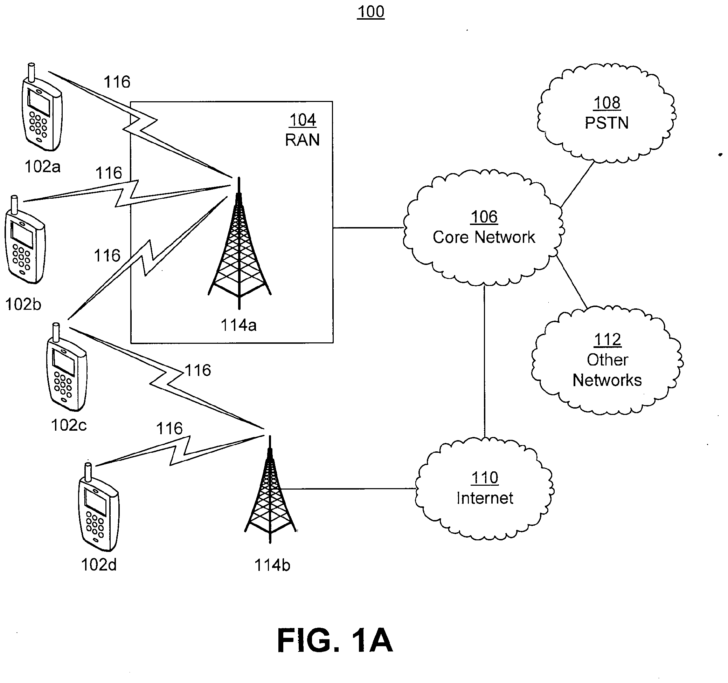

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG.1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

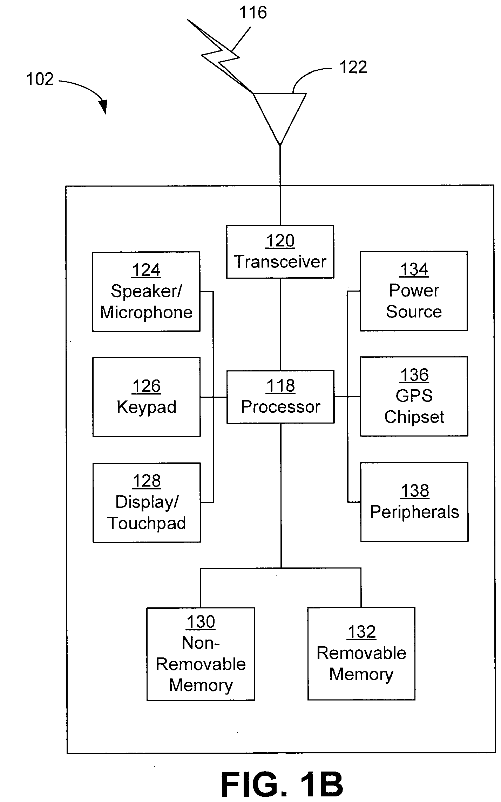

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithiumion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable locationdetermination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

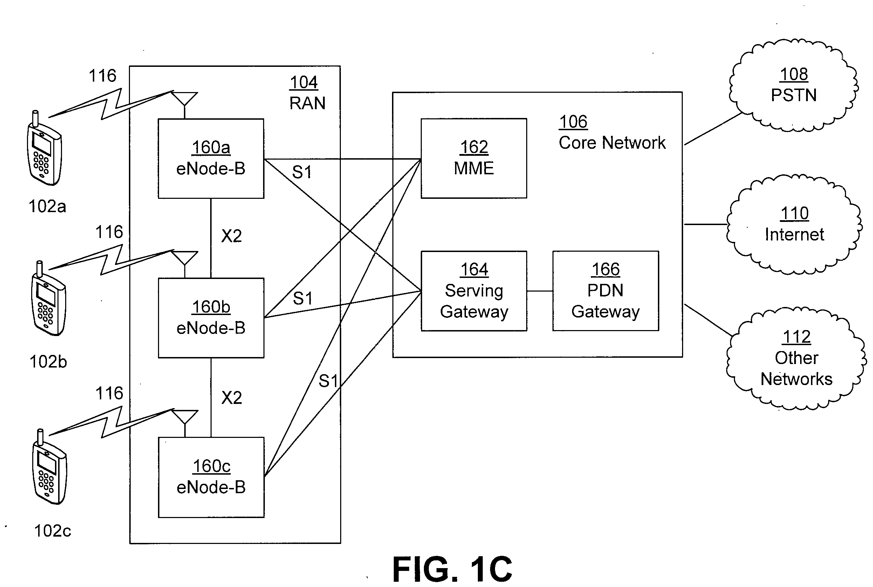

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11 ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two noncontiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11 af and 802.11ah. The channel operating bandwidths, and carriers, are reduced in 802.11 af and 802.11 ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11 ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11 ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

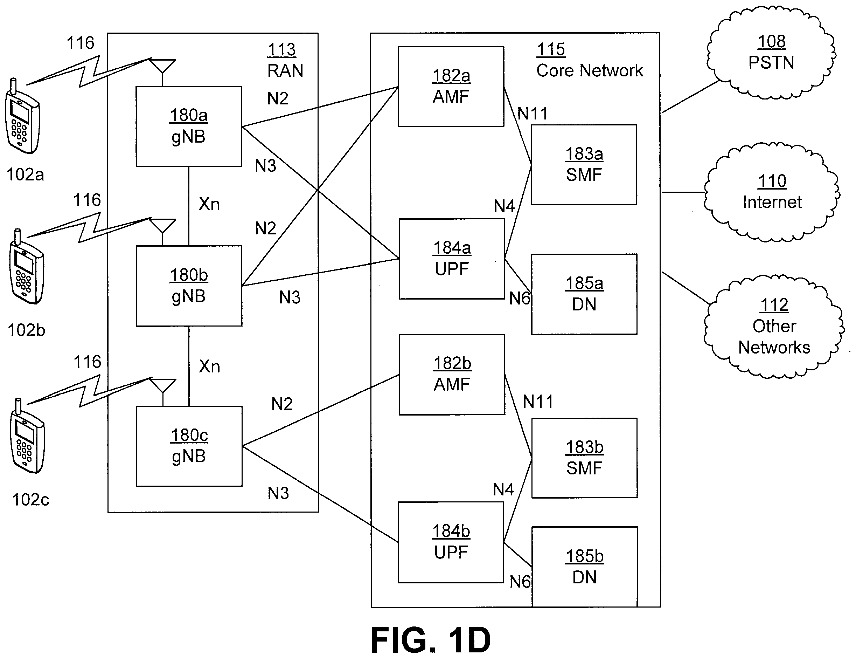

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 182 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples or embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

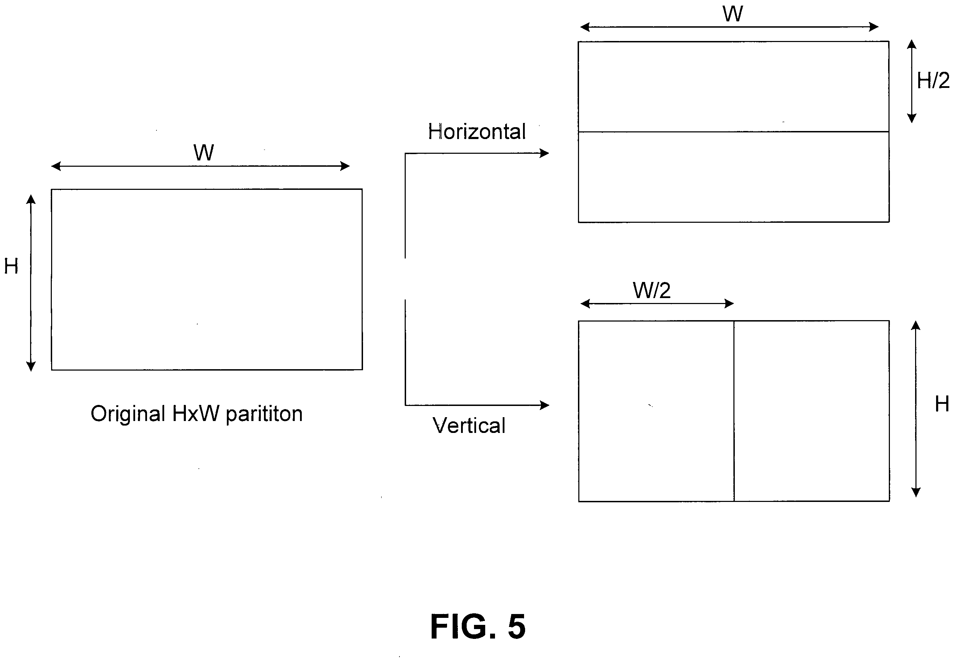

The aspects described and contemplated in this application may be implemented in many different forms. FIGS. 5-12 described herein may provide some embodiments, but other embodiments are contemplated. The discussion of FIGS. 5-12 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

The terms HDR (high dynamic range) and SDR (standard dynamic range) may be used in this disclosure. Those terms often convey specific values of dynamic range to those of ordinary skill in the art. However, additional embodiments are also intended in which a reference to HDR is understood to mean "higher dynamic range" and a reference to SDR is understood to mean "lower dynamic range." Such additional embodiments are not constrained by any specific values of dynamic range that might often be associated with the terms "high dynamic range" and "standard dynamic range."

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

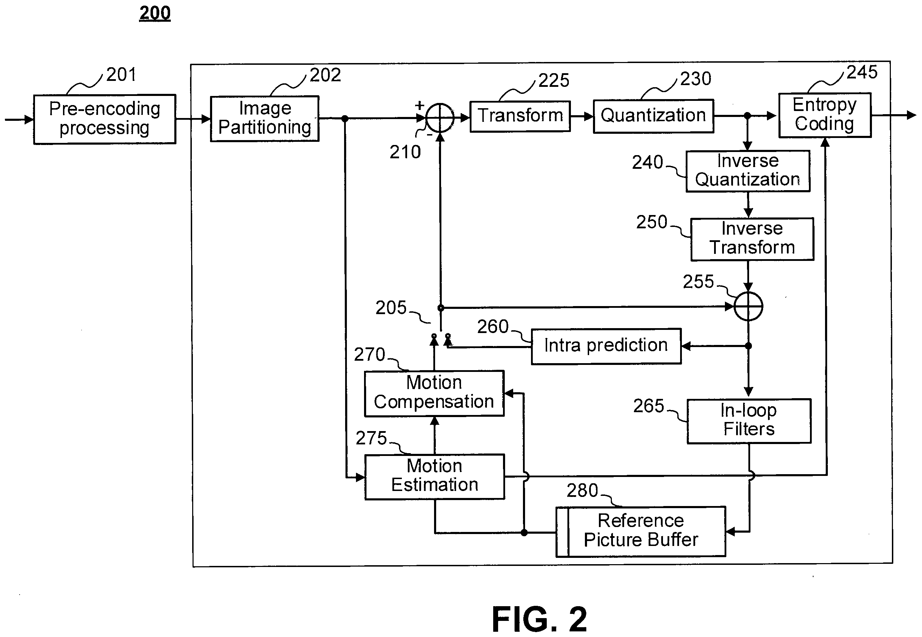

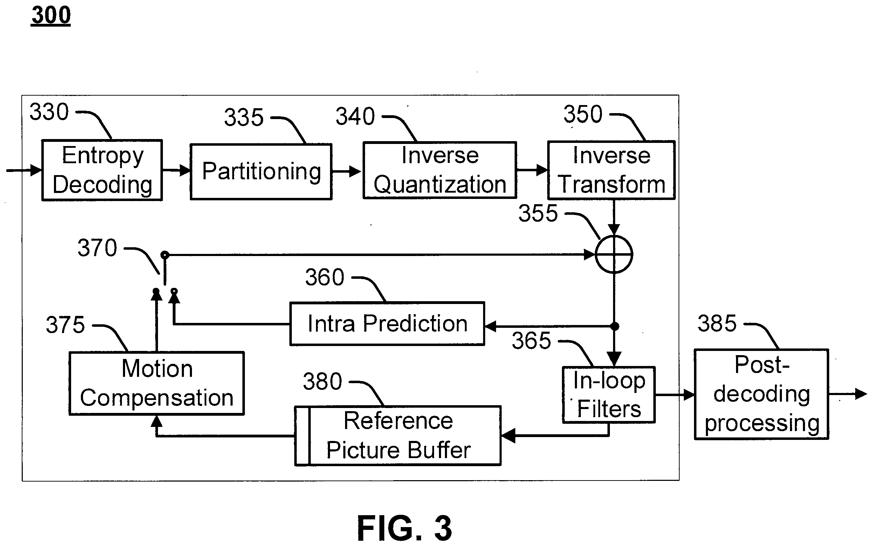

Various methods and other aspects described in this application may be used to modify modules, for example, intra prediction and entropy coding and/or decoding modules (260, 360, 245, 330), of a video encoder 200 and decoder 300 as shown in FIG. 2 and FIG. 3, respectively. Moreover, the subject matter disclosed herein presents aspects that are not limited to VVC or HEVC, and may be applied, for example, to any type, format or version of video coding, whether described in a standard or a recommendation, whether pre-existing or future-developed, and extensions of any such standards and recommendations (e.g., including VVC and HEVC). Unless indicated otherwise, or technically precluded, the aspects described in this application may be used individually or in combination.

Various numeric values are used in examples described the present application, such as coefficients, block sizes, etc. These and other specific values are for purposes of describing examples and the aspects described are not limited to these specific values.

FIG. 2 is a diagram showing an example video encoder (e.g., an example block-based hybrid video encoder) 200. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder 300. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). For a given picture, the contents of the reference picture buffer 380 on the decoder 300 side may be identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

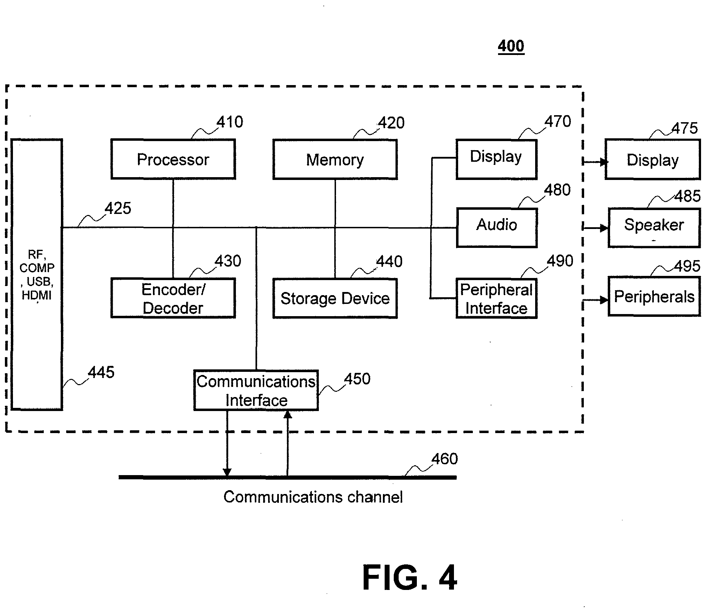

FIG. 4 is a diagram showing an example of a system in which various aspects and embodiments described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various embodiments, the system 400 is communicatively coupled to one or more other systems, or other electronic devices, via, for example, a communications bus or through dedicated input and/or output ports. In various embodiments, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various embodiments, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 410 and/or the encoder/decoder module 430 is used to store instructions and to provide working memory for processing that is needed during encoding or decoding. In other embodiments, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as, for example, MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia interface (HDMI) input terminal. Other examples, not shown in FIG. 4, include composite video.

In various embodiments, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the data stream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various embodiments, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these embodiments is typically connected to an access point or router that provides access to external networks including the Internet for allowing streaming applications and other over-the-top communications. Other embodiments provide streamed data to the system 400 using a set-top box that delivers the data over the HDMI connection of the input block 445. Still other embodiments provide streamed data to the system 400 using the RF connection of the input block 445. As indicated above, various embodiments provide data in a non-streaming manner. Additionally, various embodiments use wireless networks other than Wi-Fi, for example a cellular network or a Bluetooth network.

The system 400 can provide an output signal to various output devices, including a display 475, speakers 485, and other peripheral devices 495. The display 475 of various embodiments includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples of embodiments, one or more of a stand-alone digital video disc (or digital versatile disc) (DVR, for both terms), a disk player, a stereo system, and/or a lighting system. Various embodiments use one or more peripheral devices 495 that provide a function based on the output of the system 400. For example, a disk player performs the function of playing the output of the system 400.

In various embodiments, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various embodiments, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various embodiments in which the display 475 and speakers 485 are external components, the output signal may be provided via dedicated output connections, including, for example, HDMI ports, USB ports, or COMP outputs.

The embodiments may be carried out by computer software implemented by the processor 410 or by hardware, or by a combination of hardware and software. As a non-limiting example, the embodiments may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, obtaining a video block, wherein a width of the video block and a height of the video block are not equal; determining an intra prediction mode that is applicable to the video block; determining a partition type of the video block based on the width of the video block and the height of the video block; partitioning, based on the partition type, the video block into a first partition of the video block and a second partition of the video block, wherein the first partition of the video block is to be predicted using a horizontal or vertical intra prediction mode; predicting the first partition of the video block using the horizontal or vertical intra prediction mode and the second partition of the video block using the intra prediction mode that is applicable to the video block, wherein the intra prediction mode that is applicable to the video block is not the horizontal or vertical intra prediction mode; and decoding the video block based on the first partition of the video block and the second partition of the video block, etc. A block may be, for example, a coding block.

As further embodiments, in one example "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, obtaining a video block, wherein a width of the video block and a height of the video block are not equal; determining an intra prediction mode that is applicable to the video block; determining a partition type of the video block based on the width of the video block and the height of the video block; partitioning, based on the partition type, the video block into a first partition of the video block and a second partition of the video block, wherein the first partition of the video block is to be predicted using a horizontal or vertical intra prediction mode; predicting the first partition of the video block using the horizontal or vertical intra prediction mode and the second partition of the video block using the intra prediction mode that is applicable to the video block, wherein the intra prediction mode that is applicable to the video block is not the horizontal or vertical intra prediction mode; and encoding the video block based on the first partition of the video block and the second partition of the video block, etc. A block may be, for example, a coding block.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, for example, *NO_SPLIT, HOR_SPLIT, VER_SPLIT, ISPmode, MPMflag, splitFlag,* etc., are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment," "an embodiment," "an example," "one implementation" or "an implementation," as well as other variations thereof, means that a particular feature, structure, characteristic, and so forth described in connection with the embodiment is included in at least one embodiment. Thus, the appearances of the phrase "in one embodiment," "in an embodiment," "in an example," "in one implementation," or "in an implementation", as well any other variations, appearing in various places throughout this application are not necessarily all referring to the same embodiment or example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Many embodiments are described herein. Features of embodiments may be provided alone or in any combination, across various claim categories and types. Further, embodiments may include one or more of the features, devices, or aspects described herein, alone or in any combination, across various claim categories and types. For example, features described herein can be implemented in a bitstream or signal that includes information generated as described herein. The information can allow a decoder to decode a bitstream, the encoder, bitstream, and/or decoder according to any of the embodiments described. For example, features described herein can be implemented by creating and/or transmitting and/or receiving and/or decoding a bitstream or signal. For example, features described herein can be implemented a method, process, apparatus, medium storing instructions, medium storing data, or signal. For example, features described herein can be implemented by a TV, set-top box, cell phone, tablet, or other electronic device that performs decoding. The TV, set-top box, cell phone, tablet, or other electronic device can display (e.g., using a monitor, screen, or other type of display) a resulting image (e.g., an image from residual reconstruction of the video bitstream). The TV, set-top box, cell phone, tablet, or other electronic device can receive a signal including an encoded image and perform decoding.

Systems, devices, and methods are described herein for intra prediction with block split.

In examples, a device for video decoding (e.g., a video decoder) may obtain a video block. The width of the video block and the height of the video block may not be equal. The device may determine an intra prediction mode that is applicable to the video block. The device may determine a partition type of the video block based on the width of the video block and the height of the video block (e.g., the partition type of the video block may be determined to be a horizontal partition type based on the height of the video block being greater than the width of the video block). The device may partition, based on the partition type, the video block into a first partition of the video block and a second partition of the video block (e.g., the first partition of the video block may be predicted using a horizontal or vertical intra prediction mode). The device may predict the first partition of the video block using the horizontal or vertical intra prediction mode and the second partition of the video block using the intra prediction mode that is applicable to the video block. The intra prediction mode that is applicable to the video block may not be the horizontal or vertical intra prediction mode. The device may decode the video block based on the first partition of the video block and the second partition of the video block.

In examples, the device may receive a partition indicator that indicates that the video block (e.g., that has the unequal width and height) is to be partitioned based on the width of the video block and the height of the video block. The device may receive a prediction scheme indicator that indicates whether a vertical intra prediction mode or a horizontal intra prediction mode is to be used to predict the first partition of the video block. The first partition of the video block may be predicted according to the prediction scheme indicator. For example, if the prediction scheme indicator indicates that a vertical intra prediction mode is to be used to predict the first partition of the video block, the device may predict the first partition of the video block using the vertical intra prediction mode. If the prediction scheme indicator indicates that a horizontal intra prediction mode is to be used to predict the first partition of the video block, the device may predict the first partition of the video block using the horizontal intra prediction mode.

In examples, the device may determine, based on the partition type of the video block, whether a vertical intra prediction mode or a horizontal intra prediction mode is to be used to predict the first partition of the video block. The first partition of the video block may be predicted according to the determination of whether the vertical intra prediction mode or the horizontal intra prediction mode is to be used to predict the first partition of the video block. For example, if the partition type of the video block is a vertical partition type, the device may predict the first partition of the video block using the vertical intra prediction mode. If the partition type of the video block is a horizontal partition type, the device may predict the first partition of the video block using the horizontal intra prediction mode.

The device may determine that one of the following: template based intra prediction (TIMD), decoder side intra mode derivation (DIMD), multiple reference lines (MRL), matrix based intra prediction (MIP), most probable modes (MPM), or template-based multiple reference lines (TMRL) is enabled for the video block. The intra prediction mode that is applicable to the video block may be determined based on the enabled one of the TIMD, DIMD, MRL, MIP, MPM, or TMRL. For example, the device may determine that TIMD is enabled for the video block and determine an intra prediction mode for the video block based on TIMD. The device may predict the first partition of the video block using a vertical/horizontal intra prediction mode and the second partition of the video block using the intra prediction mode that is determined using TIMD.

In some examples, only a vertical intra prediction mode may be permitted for the first partition of the video block, and the first partition of the video block may be predicted using the vertical intra prediction mode.

In examples, the device may determine a prediction of the video block based on the prediction of the first partition of the video block and the prediction of the second partition of the video block. For example, the prediction of the video block may be a simple average or a weighted average of the prediction of the first partition of the video block and the prediction of the second partition of the video block. The device may decode a residual coefficient associated with the video block. The device may apply the decoded residual coefficient to the prediction of the video block. The video block may be partitioned symmetrically into the first partition and the second partition of the video block. The video block may be partitioned asymmetrically into the first partition and the second partition of the video block.

In examples, a device for video encoding (e.g., a video encoder) may obtain a video block. The width of the video block and the height of the video block may not be equal. The device may determine an intra prediction mode that is applicable to the video block. The device may determine a partition type of the video block based on the width of the video block and the height of the video block (e.g., the partition type of the video block may be determined to be a horizontal partition type based on the height of the video block being greater than the width of the video block). The device may partition, based on the partition type, the video block into a first partition of the video block and a second partition of the video block (e.g., the first partition of the video block may be predicted using a horizontal or vertical intra prediction mode). The device may predict the first partition of the video block using the horizontal or vertical intra prediction mode and the second partition of the video block using the intra prediction mode that is applicable to the video block. The intra prediction mode that is applicable to the video block may not be the horizontal or vertical intra prediction mode. The device may encode the video block based on the first partition of the video block and the second partition of the video block.

In examples, the device may send a partition indicator that indicates that the video block (e.g., that has the unequal width and height) is to be partitioned based on the width of the video block and the height of the video block. The device may send a prediction scheme indicator that indicates whether a vertical intra prediction mode or a horizontal intra prediction mode is to be used to predict the first partition of the video block. The first partition of the video block may be predicted according to the prediction scheme indicator. For example, if the prediction scheme indicator indicates that a vertical intra prediction mode is to be used to predict the first partition of the video block, the device may predict the first partition of the video block using the vertical intra prediction mode. If the prediction scheme indicator indicates that a horizontal intra prediction mode is to be used to predict the first partition of the video block, the device may predict the first partition of the video block using the horizontal intra prediction mode.

In examples, the device may determine, based on the partition type of the video block, whether a vertical intra prediction mode or a horizontal intra prediction mode is to be used to predict the first partition of the video block. The first partition of the video block may be predicted according to the determination of whether the vertical intra prediction mode or the horizontal intra prediction mode is to be used to predict the first partition of the video block. For example, if the partition type of the video block is a vertical partition type, the device may predict the first partition of the video block using the vertical intra prediction mode. If the partition type of the video block is a horizontal partition type, the device may predict the first partition of the video block using the horizontal intra prediction mode.

The device may determine that one of the following: TIMD, DIMD, MRL, MIP, MPM, or TMRL is enabled for the video block. The intra prediction mode that is applicable to the video block may be determined based on the enabled one of the TIMD, DIMD, MRL, MIP, MPM, or TMRL. For example, the device may determine that TIMD is enabled for the video block and determine an intra prediction mode for the video block based on TIMD. The device may predict the first partition of the video block using a vertical/horizontal intra prediction mode and the second partition of the video block using the intra prediction mode that is determined using TIMD.

In some examples, only a vertical intra prediction mode may be permitted for the first partition of the video block, and the first partition of the video block may be predicted using the vertical intra prediction mode.

In examples, the device may determine a prediction of the video block based on the prediction of the first partition of the video block and the prediction of the second partition of the video block. For example, the prediction of the video block may be a simple average or a weighted average of the prediction of the first partition of the video block and the prediction of the second partition of the video block. The video block may be partitioned symmetrically into the first partition and the second partition of the video block. The video block may be partitioned asymmetrically into the first partition and the second partition of the video block.

In examples, the prediction of the first partition of the video block using the horizontal or vertical intra prediction mode, and the second partition of the video block using the intra prediction mode that is applicable to the video block may be evaluated against a prediction of the video block without a partition. The device may determine that the first prediction is to be used to encode the video block. The device may send a partition indicator that indicates that the video block (e.g., that has the unequal width and height) is to be partitioned based on the width of the video block and the height of the video block.

An intra prediction tool (e.g., TIMD, DIMD, MRL, MIP, IntraTMP, MPM, or TMRL) may be used to derive the intra prediction mode of the current block, which may be used to predict the second partition of the current block using the intra prediction with block split as described in one or more examples herein.

Example prediction tools/modes as described in one or more examples herein may include decoder-side intra mode derivation (DIMD) and/or template-based intra mode derivation (TIMD). In these modes (e.g., both modes), the reconstructed pixels surrounding the current block on the top and left directions (e.g., template pixels) may be used to derive the prediction modes (e.g., intra prediction modes). In DIMD, the template of reconstructed pixels may be analyzed to deduce the directionalities of the template, from which the directional modes (e.g., five directional modes) may be selected. The prediction signal may be generated by blending the modes (e.g., five modes) with the planar mode. In TIMD, prediction modes (e.g., intra prediction modes) may be tested on the template of reconstructed pixels. The best modes (e.g., the two best modes) may be selected (e.g., the modes which minimize the sum of absolute transform difference (SATD) between the template of reconstructed pixels and its prediction). The prediction signal may be generated by either applying the best mode or blending those modes (e.g., two modes), depending on their prediction SATDs.

Feature(s) associated with decoder-side intra mode derivation (DIMD) are provided herein.

When DIMD is applied, one or more (e.g., five) intra modes may be derived from the reconstructed neighbor samples (e.g., by analyzing the directionality of the content in the surrounding of the current block). The (e.g., five) predictors may be combined with the planar mode predictor (e.g., with the weights derived from a histogram of gradients (HoG)). The HoG may be computed on an L-shaped template (e.g., a threesample wide/high L-shaped template) formed of already reconstructed samples. Vertical and horizontal Sobel filters may apply to the L-shape template to obtain gradients (e.g., obtaining a gradient at each position where vertical and horizontal Sobel filters apply), and the HoG may be incremented with the gradient's magnitudes (e.g., the magnitude of each gradient incrementing the bin associated to this gradient direction). The directions associated to the HoG bins of highest cumulative magnitudes may be selected as derived DIMD modes. The predictors obtained with the derived DIMD modes may be blended to form the final DIMD prediction. Uniform or spatial blending may be used (e.g., where the DIMD predictors are combined with a planar predictor, for example, using weights that depend on the relative magnitudes of the modes in the HoG).

Derived intra modes may be included in the primary list of intra most probable modes (MPM). The DIMD process may be performed before the MPM list is constructed. The primary derived intra mode of a DIMD block may be stored with a block. The primary derived intra mode may be used for MPM list construction of the neighboring blocks.

The region of neighboring reconstructed samples (e.g., used for computing the histogram of gradients) may depend on reconstructed samples availability. The region of decoded reference samples of current WxH luma CB may extend towards the above-right side (e.g., if available, up to W additional columns). The region of decoded reference samples of current WxH luma CB may extend towards the bottom-left side (e.g., if available, up to H additional rows).

A DIMD histogram may be computed.

The histogram may be computed by using horizontal and vertical Sobel filters on pixels in a template (e.g., of width 3) around the block. For example, for a (e.g., each) pixel, the following filters may be applied:

$$Gy = \begin{matrix} 1 & 2 & 1 \\ 0 & 0 & 0 \\ -1 & -2 & -1 \end{matrix}$$

$$Gx = \begin{matrix} 1 & 0 & -1 \\ 2 & 0 & -2 \\ 1 & 0 & -1 \end{matrix} \qquad ,$$

If both Gy and Gx are not zero, the orientation of the current pixel is computed as:

$$Orient = G_y/G_x$$

Otherwise, if Gy is zero, the orientation may be computed/considered as vertical. Otherwise, the orientation may be computed/considered as horizontal.

The histogram may be computed by summing the values (e.g., summing up all values) of an (e.g., each) orientation. The histogram may not show whether the template has no orientation. For example, DIMD may not output DC or planar mode.

A template-based multiple reference line intra prediction (TMRL) mode may combine reference lines and prediction modes and use a template matching method to construct a list of candidate combinations. An index to the candidate combination list may be coded to indicate which reference line and/or prediction mode may be used to code a current block. An MRL for a non-TIMD part may be replaced by the TMRL mode.

The TMRL mode may extend a reference line candidate list and/or an intra-prediction mode candidate list. For example, the extended reference line candidate list may include lines {1, 3, 5, 7, 12}. Restrictions on the top CTU row may be unchanged. For example, the size of the intra-prediction mode candidate list may be set to 10. The construction of the intra-prediction-mode candidate list may be similar to that of MPM. A PLANAR mode may be excluded from the intra-prediction-mode candidate list. A DC mode may be added after the modes of one or more (e.g., 5) neighboring PUs and/or one or more DIMD modes (e.g., if they are not included). One or more angular modes with delta angles from $\pm 1$ to $\pm 4$ may be added. The precision of an angular prediction may be extended from 65 to 129. Non-adjacent positions may be added as candidates to construct the intra prediction candidate list. If neighboring or non-adjacent blocks are coded with an SGPM or a GPM mode, the intra modes of those blocks may be replaced by partitioning angles.

A TMRL candidates list may be constructed as follows. There may be multiple (e.g., 5x10=50) combinations of extended reference lines and allowed intra-prediction modes for a block. Since the extended reference line may start from reference line 1, the area covered by reference line 0 may be used for template matching. The SAD costs over a template area may be calculated between prediction samples (e.g., generated by 50 combinations) and reconstruction samples. A number of (e.g., 20) combinations with the least SAD cost may be selected in ascending order to form the TMRL candidates list.

An index to the TMRL candidates list may be coded (e.g., instead of coding the reference lines and the intra mode directly) to indicate which combination of reference lines and prediction mode may be used to code the current block.

Matrix weighted intra prediction (MIP) may use one line of H reconstructed neighboring boundary samples left of the block and one line of W reconstructed neighboring boundary samples above the block as input. If the reconstructed samples are unavailable, they may be generated (e.g., as done in the intra prediction). The generation of the prediction signal may be based on (e.g., averaging, matrix vector multiplication and linear interpolation). One or more pre-determined (fixed) weighting matrices corresponding to various MIP modes may be used.

Multiple reference lines (MRL) prediction may use an MRL candidate list, which may include, for example, two (2) additional reference lines, e.g., {1, 2}. The lines (e.g., each of the lines) may be tested for prediction with prediction modes from the MPM list, e.g., excluding the PLANAR mode. The chosen reference line index may be encoded as a flag (e.g., multiRefIdx). The flag (e.g., multiRefIdx) may be (e.g., set to have a value of) zero (0), one (1), or two (2). The prediction may or may not be fused. In some examples, the prediction may be based on a single reference line. In some examples, ISP may not be allowed, for example, if/when multiRefIdx is equal to one (1) or two (2),

Feature(s) associated with intra prediction with block split are provided herein.

One or more specifications may support intra prediction of a block involving splitting the block into sub-partitions. For example, intra prediction with block splits may be implemented based on intra prediction with sub-partitions (ISP) or spatial geometric partitioning mode (SGPM). In ISP, a coding unit (CU) may be split into two or four equal sized sub-partitions (e.g., either horizontally or vertically). The sub-partitions may be encoded and decoded (e.g., sequentially) with the prediction mode of the CU. In SGPM, a CU may be split in two parts (e.g., along a predefined direction). The part may be encoded with two different prediction modes (e.g., which may be blended to obtain the final prediction). SGPM may be more flexible than the ISP (e.g., in terms of the split directions and allowed prediction modes). Feature(s) described herein may be less complex than SGPM. Feature(s) described herein may support different prediction modes (e.g., two different prediction modes) for the (e.g., two) parts obtained with a vertical or a horizontal split.

A CU may be split into parts (e.g., two parts) based on (e.g., depending on) the CU shape. If the CU is flat (e.g., a flat shape, for example, its width is larger than its height), the CU may be split vertically. If the CU is tall (e.g., its height is longer than its width), the CU may be split horizontally. The CU may be split at (pre)defined positions. A part (e.g., one of the two parts) may be determined (e.g., constrained) to have a (e.g., strictly) vertical or horizontal prediction mode (e.g., depending on the split type). The other part may be predicted using the prediction mode of the CU. The prediction mode may be derived using a template. The prediction mode may be signaled (e.g., as any other prediction mode). The prediction of the parts (e.g., in two parts) may be blended (e.g., as in SGPM) to obtain the final prediction.

Feature(s) described herein may be adopted/implemented in standards to support the described block splits.

In intra prediction, a target block (e.g., sometimes referred to as a coding unit (CU)) may be intra predicted as a (e.g., single) block or split into multiple parts (e.g., which may be predicted separately). ISP and SGPM may be categorized separately from other tools (e.g., such as DIMD, TIMD, intra template matching prediction (IntraTMP), MIP, TMRL, MRL, etc.). In ISP, a target CU may be divided into multiple (e.g., two or four) equal sized sub-partitions. The sub-partitions may be decoded (e.g., sequentially decoded) with the prediction mode of the CU. A sub-partition may use (e.g., benefit from the availability of) the decoded samples from the neighboring sub-partition. The neighboring sub-partition may be the immediate neighbor of the current sub-partition. In SGPM, a CU may be split into (e.g., two) geometric partitions based on a (pre)defined split direction. The predictions may be determined/predicted with one or more (e.g., two) prediction modes. The (e.g., two) predictions may be blended to arrive at the final prediction. The (e.g., two) prediction modes and/or the split directions may be decided from a list (e.g. a list that is derived using a template).

SGPM may be (e.g., very) complex (e.g., and more flexible than the ISP) because of the number of prediction modes, split directions, and the usage of a template. Feature(s) described herein relate to a simpler technique in which a rectangular block is split into parts (e.g., two parts), for example, where a part (e.g., one of the parts) is predicted with a vertical or horizontal mode (e.g., the strictly vertical or horizontal mode) based on (e.g., depending on) the split type. In this case, the other part may be predicted with the prediction mode of the CU. The predictions may be available at the encoder. The techniques described herein may not require additional complexity in checking the rate distortion (RD) performance of block split. If the prediction with a block split results in better RD performance for the current CU, the encoder may signal an indication of the results (e.g., with a 1-bit flag). The decoder may receive the indication and perform prediction based on the indication (e.g., perform identical prediction after decoding the flag value).

Feature(s) associated with intra prediction with sub-partitions (ISP) are provided herein.

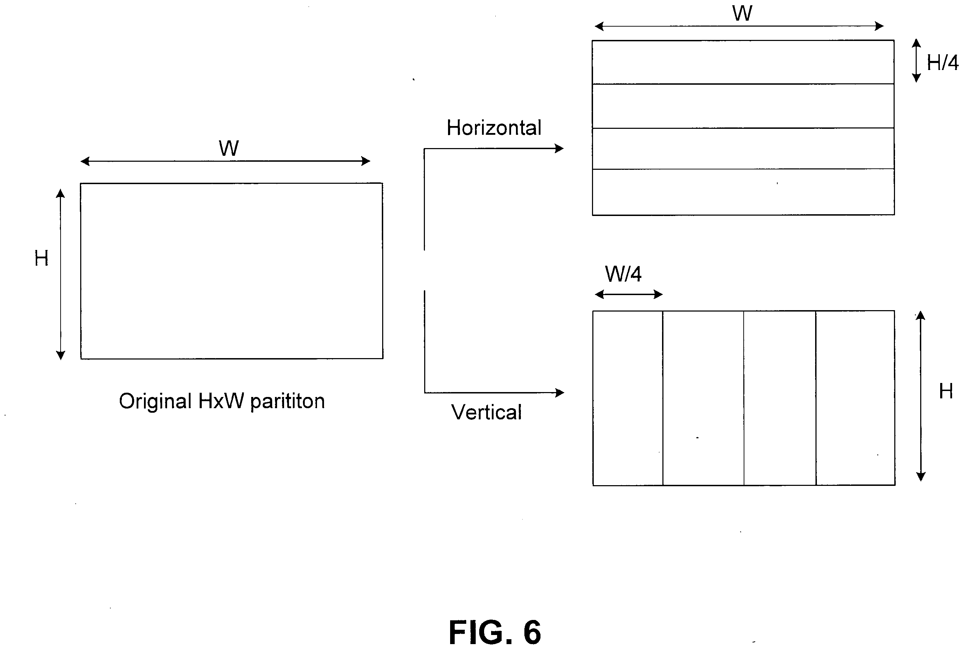

The ISP tool may divide luma intra-predicted blocks vertically or horizontally into sub-partitions (e.g., 2 or 4 sub-partitions), for example, depending on the block size (e.g., as shown in Table 1). A sub-partition may have (e.g., must have) at least 16 samples. Blocks of size 4x4 may not be divided into sub-partitions. For example, a block of size 4x8 may be split horizontally into (e.g., only) two sub-partitions of size 4x4 (e.g., each). As another example, a block of size 8x4 may be split vertically into (e.g., only) two sub-partitions of size 4x4 (e.g., each). As another example, a block of size 16x4 may be split vertically into (e.g., only) four sub-partitions of size 4x4 (e.g., each). In some examples, (e.g., for convenience of hardware implementation), a size (e.g., the minimum size) of a sub-partition width may be (e.g., may be constrained to) 4 during the intra prediction step. In this case, a block of size 4x8 may be split vertically into (e.g.' only) two sub-partitions of size 2x8 (e.g., each) for transform coding and/or entropy coding of the quantized transform coefficients (e.g., this block of size 4x8 may not (e.g., cannot) be split vertically during the intra prediction step). In another example, a block of size 4x16 may be split vertically into (e.g., only) four sub-partitions of size 1x16 (e.g., each) for transform coding and/or entropy coding of the quantized transform coefficients (e.g., this block of size 4x16 may not (e.g., cannot) be split vertically during the intra prediction step). FIGs. 5 and 6 illustrate examples of block splits.

Table 1: Number of sub-partitions depending on the block size

| Block Size | Number of Sub-Partitions |
|---|---|
| $4 \times 4$ | 1 |
| $8 \times 4$ | 2 |
| $16 \times 16$, 16x32, 32x16 | 4 |

FIG. 5 illustrates an example division of WxH block, e.g. H = 4 and W = 8. FIG. 6 illustrates an example division of WxH block, e.g. H = 16 and W = 32.

For a sub-partition (e.g., each of the sub-partitions), a prediction may be constructed using the decoded prediction mode of the parent CU. The prediction signal may be included in (e.g., added to) the decoded residual signal for the sub-partition. The decoded residual signal may be generated by entropy decoding the coefficients sent by the encoder, inverse quantizing, and inverse transforming the coefficients, to reconstruct the pixels in the sub-partition. The reconstructed values of a (e.g., each) sub-partition (e.g., except for the first sub-partition) may be available to generate the prediction of the next sub-partition.

The sub-partitions may be processed in order (e.g., in the normal order), for example, irrespective of the intra prediction mode and the split utilized. For example, the first sub-partition to be processed may be the sub-partition that includes the top-left sample of the CU. The remaining sub-partitions may be processed by continuing downwards (e.g., for a horizontal split) or to the right (e.g., for a vertical split), sequentially. The split-type of a CU may be transmitted using an indication. For example, the indication may be a bit. Bit '0' may indicate no split (e.g., NO_SPLIT). Bits '10' and '11' may indicate horizontal split (HOR_SPLIT) and vertical split (e.g., VER_SPLIT), respectively.

One or more coding techniques may be used/supported. For example, the coding techniques may include intra prediction with multiple reference lines (MRL), matrix based intra prediction (MIP), template based intra prediction (TIMD), decoder side mode derivation (DIMD), spatial GPM (SGPM), intra prediction with template matching (IntraTmp), etc. A target block may be eligible for ISP if (e.g., only when) using the first reference line (e.g., and with MIP, DIMD, SGPM, IntraTmp, etc. are disabled). For example, a CU may be tested for ISP if (e.g., only when) the flags indicating the mentioned modes are disabled (e.g., all disabled). If a block has an MRL index other than 0, or if MIP, DIMD, SGPM, or IntraTmp, etc., is enabled, the ISP coding mode will be inferred to be 0. In this case, the split flag may not be decoded. In this case, the CU (e.g., the whole CU) may be decoded as a (e.g., single) unit (e.g., without sub-partitions).

Feature(s) associated with spatial geometric partitioning mode (SGPM) are provided herein.

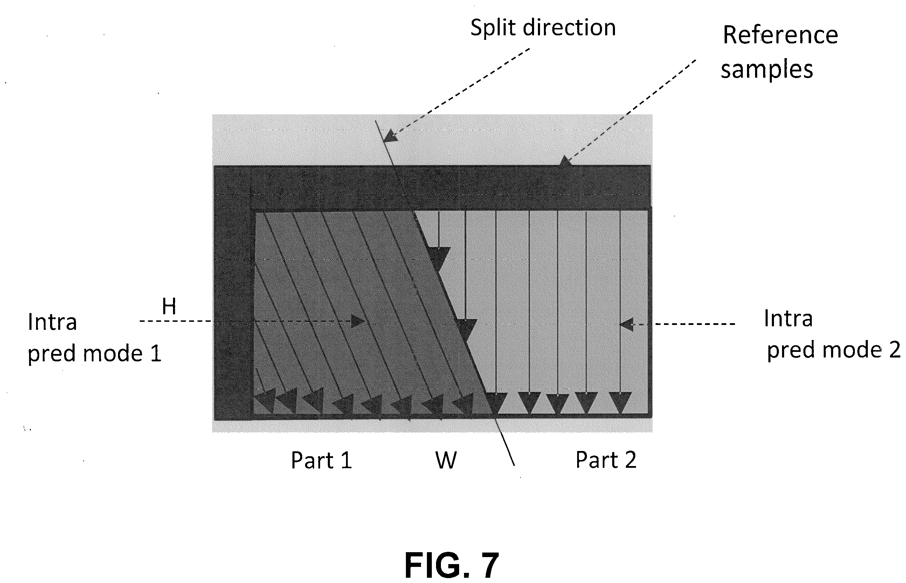

SGPM may refer to an intra prediction tool that emulates GPM for inter prediction. SGPM may involve partitioning a coding block into (e.g., two) parts. Intra-prediction modes (e.g., two distinct intra-prediction modes) may be generated (e.g., one intra-prediction mode for each part). For example, predictions for the CU (e.g., two predictions for the entire CU) may be constructed (e.g., one with each prediction mode). The predictions may be blended according to the partition direction (e.g., so that each part gets its corresponding prediction), for example, as shown in FIG. 7.

FIG. 7 illustrates an example block split in SGPM. A block may be split in partition modes or directions (e.g., any one among 26 partition modes or directions). The split may result in two parts (e.g., each associated with its own prediction mode).

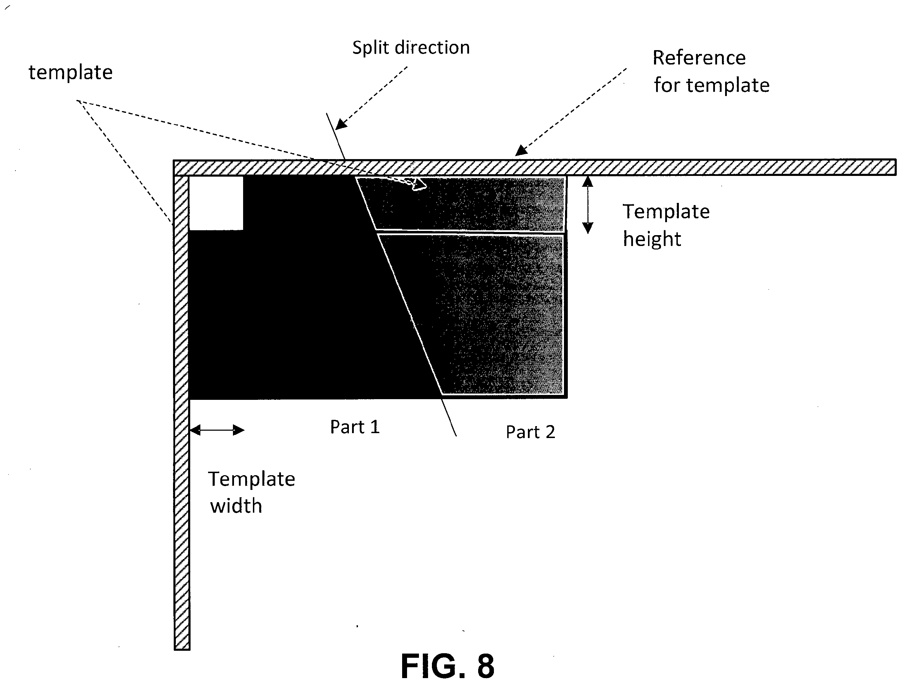

The partition and associated prediction information may be expressed in the bit-stream. For example, SGPM may employ a template-reordered candidate list (e.g., where each candidate in the list comprises a combination of the partition mode and two intra prediction modes). The candidate index may be signaled in the bit-stream. A template may be used to generate this candidate list. An example shape of the template is illustrated in FIG. 8. For a (e.g., each) possible combination of a (e.g., one) partition mode and one or more (e.g., two) intra prediction modes, a prediction may be generated for the template (e.g., with the partitioning weight extended to the template). The combinations may be ranked (e.g., in ascending order) based on the associated SAD between the prediction and reconstruction of the template. The length of the candidate list may be set equal to 16. The candidates in the candidate list may be regarded as the most probable SGPM combinations for the current block. The encoder and decoder may construct the same candidate list based on the template.

FIG. 8 illustrates an example template (e.g., one used in SGPM to derive the SGPM candidate list). The candidate list may include a split direction and two prediction modes for each split direction.

To reduce the complexity in building the candidate list, the number of possible partition modes and the number of possible intra prediction modes may be pruned. For example, 26 out of 64 partition modes may be used. The MPMs (e.g., only the MPMs) selected out of 67 intra prediction modes may be used. The encoder may check the coding performance with the (e.g., all 16) candidates in the list (e.g., in a fast pass). The encoder may test (e.g., only) the short-listed candidates for full RD performance. If the candidate results in the best coding performance (e.g., among all modes), the encoder may signal the candidate with an *sgpmFlag* and/or (e.g., followed by) the binary encoding of the candidate index in the list. The decoder may decode the *sgpmFlag* (e.g., while parsing the bitstream). If the flag is decoded to be 1, the decoder may decode the index of the candidate in the SGPM list. In this case, the decoder may perform template prediction (e.g., the whole process of template prediction) to derive the two SGPM prediction modes for a (e.g., each) split direction to derive the list of best 16 candidates. Based on (e.g., using) the decoded candidate index, the decoder may decode the two prediction modes and the split direction. Using the two prediction modes, the decoder may predict the current block. The decoder may blend the two predictions (e.g., in the same manner as done by the encoder) to arrive at the final prediction.

Feature(s) associated with prediction with block split are provided herein.

A split may be more probable at object boundaries. To keep the additional signaling overhead low, rectangular blocks (e.g., only rectangular blocks) may be split. For example, blocks having unequal width and height may be split.

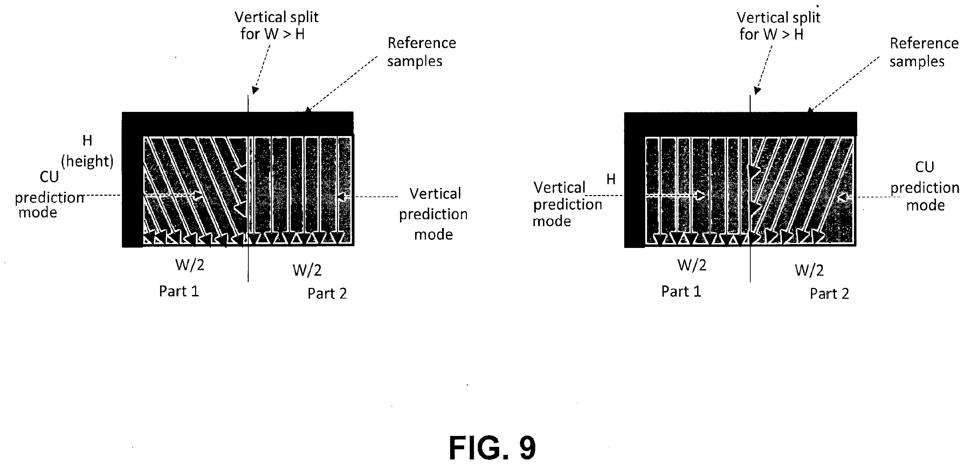

Blocks with a width larger than the height of the block may be split vertically (e.g., into two parts), as shown in FIG. 9.

In an example first configuration, a prediction mode associated with the first part (e.g., sub-partition) of the block may be equal to the prediction mode of the CU. A prediction mode associated with the second part of the block may be equal to the (e.g., strictly) vertical mode (e.g., intra mode index 50).

In an example second configuration, a prediction mode associated with the first part (e.g., sub-partition) of the block may be equal to the vertical mode or horizontal mode (e.g., either the strictly vertical mode or the strictly horizontal mode). A prediction mode associated with the second part of the block may be equal to the prediction mode of the CU. In the first and second configurations, the split may be symmetric (e.g., the first and second parts are identical in shape).

The first configuration (e.g., only the first configuration) may be used for intra block split to limit signaling overhead. If a block is split, the encoder/decoder may (e.g., implicitly) assume that the two parts have different prediction modes. To limit the decoder complexity, a template may not be used to derive the prediction modes (e.g., whereas SGPM does use a template).

FIG. 9 illustrates example block splits if the width of the coding block is greater than the height of the coding block (e.g., in the case W > H). For example, the partition type of the video block may be determined to be a vertical partition type based on the width of the video block being greater than the height of the video block. The partition type of the video block may be determined to be a horizontal partition type based on the height of the video block being greater than the width of the video block.

The left side of FIG. 9 illustrates the first example configuration (e.g., the first part's prediction mode is equal to the prediction mode of the CU, and the second part's prediction mode is equal to the strictly vertical mode, for example intra mode 50 in FIG. 9). The right side of FIG. 9 illustrates the second example configuration (e.g., the first part's prediction mode is equal to either the strictly vertical mode or the strictly horizontal mode, and the second part's prediction mode is equal to the prediction mode of the CU).

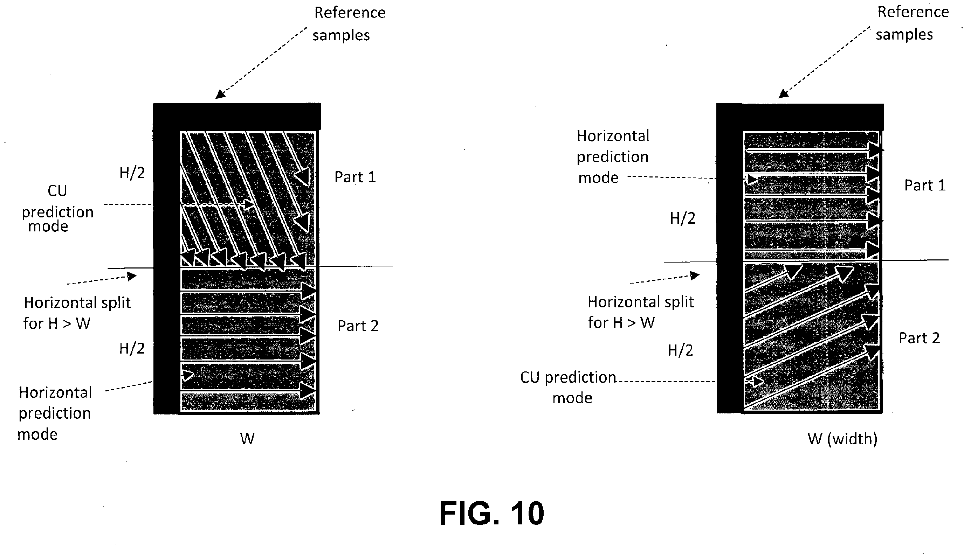

FIG. 10 illustrates example block splits if the height of the coding block is greater than the width of the coding block (e.g., in the case H > W). In this case, the block may be split horizontally into two parts. The left side of FIG. 10 illustrates the first example configuration (e.g., the first part's prediction mode is equal to the prediction mode of the CU, and the second part's prediction mode is equal to the strictly horizontal mode). The right side of FIG. 10 illustrates the second example configuration (e.g., the first part's prediction mode is equal to either the strictly vertical mode or the strictly horizontal mode, and the second part's prediction mode is equal to the prediction mode of the CU).

The split (e.g., the horizontal split) may be symmetric (e.g., similar to the vertical split case). For example, both parts may be identical in shape. The first configuration (e.g., only the first configuration) may be used for intra block split (e.g., to limit signaling overhead).

The prediction may involve one or more of the following actions. The following examples may use the first configuration as the example (e.g., regardless of whether split is vertical or horizontal). The decoder may (e.g., first) predict the first part using the prediction mode of the CU (e.g., followed by PDPC if applicable). The decoder may predict the second part using the vertical or horizontal mode (e.g., depending on if the split is vertical or horizontal). The decoder may perform a PDPC for the second part (e.g., using the predicted samples in the last column or row of the first part). The decoder may blend the two predictions (e.g., with weights adapted to symmetric vertical or horizontal splits). If the prediction mode of the CU is equal to that of the second part (e.g., vertical if the width is larger than the height and horizontal if the height is longer than the width), there may be no block split.

The following examples may use the second configuration as an example. The decoder may (e.g., first) predict the first part using the vertical or horizontal mode (e.g., followed by PDPC). The decoder may predict the second part using the prediction mode of the CU. The decoder may perform a PDPC for the second part (e.g., using the predicted samples in the last column or row of the first part). The decoder may blend the two predictions (e.g., with weights adapted to symmetric vertical or horizontal splits).

If the encoder allows (e.g., only allows) the first configuration, one bit may be used (e.g., only one bit may be required) to signal the split or no split (e.g., a partition indicator) for a rectangular block. In examples, whether split or no split is to be used may be based on evaluation. For example, this evaluation may be based on a rate distortion comparison (e.g., comparing a rate distortion associated with the split/partition to a rate distortion associated with the prediction of the entire CU/block without the split/partition). Signaling may not be required for squared blocks (e.g., because they are not split). If the two configurations are allowed, two bits of signaling may be used. For example, the first bit (e.g., a partition indicator) may signal whether to split the block or not. The second bit (e.g., a partition scheme indicator) may signal the split configuration. If the (e.g., both) horizontal and vertical prediction modes are allowed for the first part in the second configuration, a (e.g., an additional) signaling bit may be used (e.g., required) to indicate the mode used (e.g., if the first two bits indicate a split with the second configuration). In examples, the horizontal or vertical prediction mode may be selected based on evaluation (e.g., RD performance). If the (e.g., both) split configurations are allowed with the (e.g., both) vertical and horizontal modes allowed in the second configuration, a signaling scheme may be given as: '0' for no split, '10' for split with first configuration, '110' for split with second configuration where the prediction mode of the first part is vertical, and '1 1 1' for split with second configuration where the prediction mode of the first part is horizontal. Table 2 summarizes this encoding scheme.

Table 2: Encoding of block split information with a split flag

| Split Configuration | Split Flag value | Encoding |
|---|---|---|
| No split | 0 | 0 |
| Split with 1st configuration | 1 | 10 |
| Split with 2nd configuration and prediction mode of first part is vertical | 2 | 110 |
| Split with 2nd configuration and prediction mode of first part is horizontal | 3 | 111 |

To limit the amount of overhead, the encoder may decide to apply the block split for a set of modes (e.g., only for a select set of modes). For example, the encoder may only apply the block split for the modes in the most probable modes (MPM) list. In this case, the bits representing the block split may be encoded if (e.g., only if) the *MPMflag* (e.g., that indicates if the prediction mode of the CU belongs to the MPM list) is enabled.

The encoder may decide to perform a block split if the prediction mode is DIMD mode, TIMD mode, or TMRL mode. In any of these cases, the split flag information may be encoded to indicate whether the block is split (e.g., as in configuration one or configuration two). If the block is split, the decoder may not apply the usual blending operation (e.g., as done in DIMD, TIMD, TMRL, etc.). For example, the decoder may use (e.g., only use) the DIMD/TIMD/TMRL mode and the vertical/horizontal mode depending on the split configuration for the prediction of the CU.

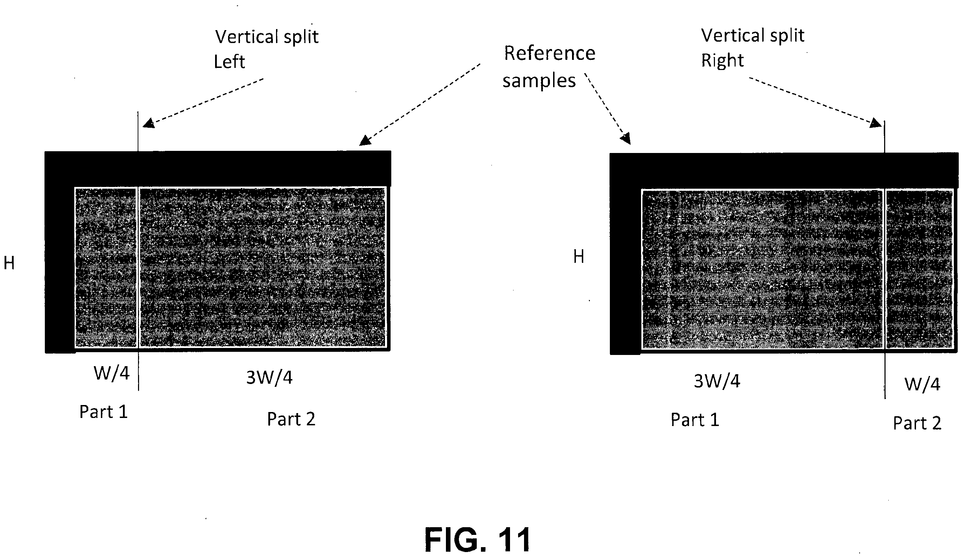

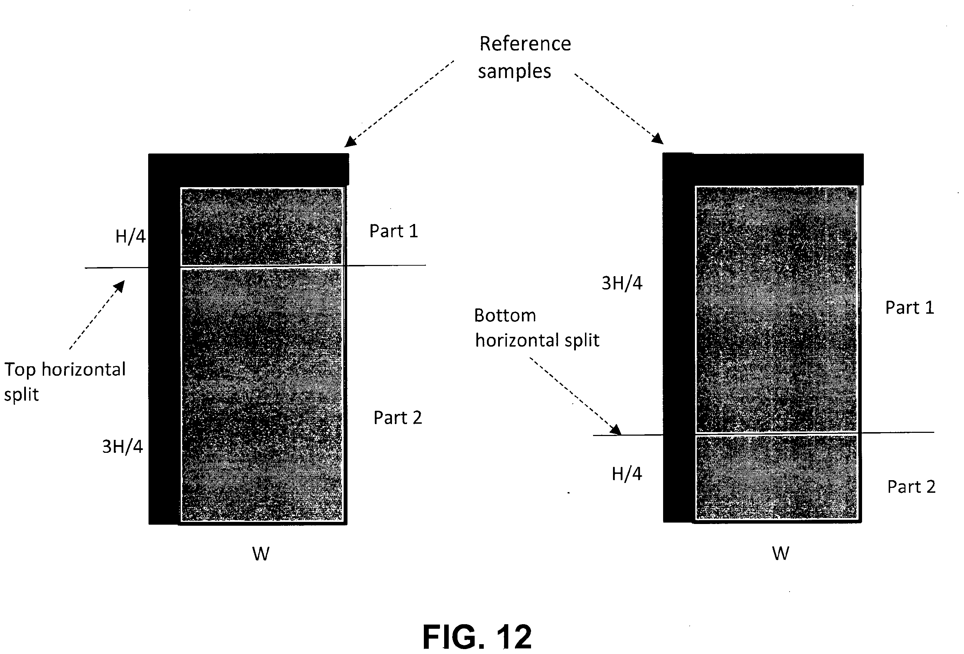

In an example, asymmetric splits may be used (e.g., instead of symmetric splits), as shown in FIGs. 11 and 12. FIG. 11 illustrates examples of asymmetric block splits when the width of the block is greater than the height of the block. FIG. 11: Asymmetric block split when W > H. Left: Configuration 1; Right: Configuration 2. FIG. 12 illustrates examples of asymmetric block splits when the height of the block is greater than the width of the block. FIG. 12: Asymmetric block split when H > W. Left: Configuration 1; Right: Configuration 2.

FIG.12: In the first case (e.g., vertical split), two vertical splits may be allowed at W/4 and (3W/4). In a second case (e.g., horizontal split), two horizontal splits may be allowed at H/4 and (3H/4). One or more of the splits (e.g., for each split type) may be allowed by the encoder.

Feature(s) in one or more examples as described herein may be different from ISP.

In ISP, the current block may be split in to two or four sub-partitions (e.g., which are predicted using the same prediction mode, for example, the prediction mode of the CU). In feature(s) disclosed herein, the two parts of a CU may have different prediction modes. For example, one part may have the prediction mode of the CU and the other part may have the vertical or horizontal mode (e.g., depending on the split configuration).

In ISP, the sub-partitions may be processed sequentially (e.g., where a sub-partition is decoded after the previous sub-partitions have been decoded). In ISP, the reference samples and the prediction in a (e.g., one) sub-partition may be dependent on the decoded sample values in the previous sub-partition. In feature(s) disclosed herein, the CU may be decoded after (e.g., one step after) the predictions in the two parts are added to the decoded residual for the CU (e.g., the whole CU).

In ISP, the ISPmode flag may be encoded to indicate if a block is to be (e.g., needs to be) split. If the ISPmode flag indicates that the block is to be split, the ISPmode flag will indicate the type of split (e.g., vertical or horizontal) to apply. In feature(s) disclosed herein, the split information may be encoded to indicate which type of split configuration is used by the encoder for the prediction. The split configuration may indicate the prediction modes used in the two parts.

Feature(s) in one or more examples as described herein may be different from SGPM.

In SGPM, the current block may be split in two parts (e.g., where the split direction is chosen among 26 predefined directions, for example, that do not contain the vertical and horizontal splits at the middle). The split direction may not depend on the block shape. In feature(s) disclosed herein, the splits may be (e.g., limited to) vertical and horizontal (e.g., only). The split direction may be dependent on the block shape.

In SGPM, the prediction modes for the two parts with a split direction may be unequal. The prediction modes may be determined based on a template. To limit the complexity, the modes may be selected from/in the MPM set (e.g., only). In feature(s) disclosed herein, the prediction modes of the two parts may be different. One of the prediction modes may be fixed (e.g., to be vertical or horizontal, for example, depending on the block shape). The other prediction mode may be determined by the encoder (e.g., using the normal search over a select set or all possible angular modes excluding the vertical/horizontal mode).

In SGPM, the encoder and the decoder may derive a list that includes 16 entries with split direction and the associated two prediction modes for the two parts. The encoder may encode the index of the candidate in the list that is used for the prediction (e.g., such that the decoder can decode the split direction and the associated two prediction modes). In feature(s) disclosed herein, the encoder/decoder may not derive a (e.g., any) list. For a given block shape, the split configuration may be fixed. The encoding of the split information may be done directly.

In SGPM, the prediction process may include predicting the CU (e.g., the whole CU) with the associated two modes. The two predictions may be blended based on the split direction. In feature(s) disclosed herein, a similar approach may be followed. The parts may be predicted separately (e.g., the first part followed by the second part). The PDPC may be used after a (e.g., each) prediction.

SGPM may not be combined with DIMD, TIMD, etc. Feature(s) disclosed herein may be combined (e.g., easily) where the prediction mode used for one part is the DIMD/TIMD mode and the other part has vertical/horizontal mode (e.g., depending on the block shape).

The feature(s) disclosed herein may not be considered an adaptation of SGPM. Any coincidences (e.g., in the asymmetric split case, the occurrence of the split direction in SGPM being the same as in the disclosed feature(s), and/or the two associated prediction modes to being the same as those described) are only a coincidence (e.g., because the candidates in SGPM list are selected based on their scores with predictions of a template).

Example implementation scenarios for the disclosed feature(s) are described herein. A codec (e.g., based on standards) may be used and/or assumed.

In a first example, the encoder may allow a block split with a rectangular block for (e.g., only for) the angular modes in the MPM list. The decoder may decode the split flag if the MPMflag is decoded as 1. Based on the decoded value of the split flag, the decoder may decide to: split the block and apply predictions in the two parts, or not split the CU and perform prediction for the (e.g., entire) CU with the decoded mode. The decoder may add the decoded residual to the prediction to reconstruct the CU. If the split flag is encoded as non-zero, the ISPMode flag is assumed to be zero.

In a second example, the encoder may allow a block split with a rectangular block with (e.g., only with) the DIMD mode. If the decoder decodes the DIMD flag to be 1, the decoder may decode the split flag information. If the decoded split flag is non-zero, the decoder may split the block. The decoder may perform predictions in the two parts (e.g., in one part using the DIMD mode, and in the other part using the vertical/horizontal part, depending on the split flag information). If the decoded split flag is zero, the decoder may perform prediction for the (e.g., entire) CU (e.g., in the normal manner as done in DIMD). The decoder may add the decoded residual to the prediction to reconstruct the CU.

In a third example, the encoder may allow a block split with a rectangular block with (e.g., only with) the TIMD mode. If the decoder decodes the TIMD flag to be 1, the decoder may decode the split flag information. If the decoded split flag is non-zero, the decoder may split the block. The decoder may perform predictions in the two parts (e.g., in one part using the TIMD mode, and in the other part using the vertical/horizontal part, depending on the split flag information). If the decoded split flag is zero, the decoder may perform prediction for the (e.g., entire) CU (e.g., in the normal manner as done in TIMD). The decoder may add the decoded residual to the prediction to reconstruct the CU.

In a fourth example, the encoder may allow a block split with a rectangular block with (e.g., only with) the TMRL mode. If the decoder decodes the TMRL flag to be 1, the decoder may decode the split flag information. If the decoded split flag is non-zero, the decoder may split the block. The decoder may perform predictions in the two parts (e.g., in one part using the TMRL mode with the corresponding reference line, and in the other part using the vertical/horizontal part for the same reference line, depending on the split flag information). If the decoded split flag is zero, the decoder may perform prediction for the (e.g., entire) CU (e.g., in the normal manner as done in TMRL). The decoder may add the decoded residual to the prediction to reconstruct the CU.

In a fifth example, the encoder may allow a block split with a (e.g., any) prediction mode if the mode is not equal to the vertical or horizontal mode (e.g., depending on the split configuration for the block). To keep the added encoder complexity minimal, the encoder may test the performance of allowed split configurations with eligible modes shortlisted with a fast pass. In this case, the encoder may encode a dedicated flag (e.g., called splitFlag) to indicate if the prediction of the block is to be (e.g., needs to be) split with two modes (e.g., comprising the decoded mode and the vertical or horizontal mode, depending on the split direction).

Any combination(s) of the described examples may be used. The feature(s) described herein may improve t=compression efficiency.

A decoder may partition a video block into a first partition of the video block and a second partition of the video block and predict the first partition of the video block using a horizontal or vertical intra prediction mode (e.g., as determined based on a partition type of the video block or based on an indicator) and the second partition of the video block using the intra prediction mode that is determined to be applicable to the video block. Decoding tools and techniques (e.g., as illustrated in FIG. 3) including, for example, one or more of entropy decoding, inverse quantization, inverse transformation, and differential decoding may be used to enable one or more examples as described herein in a decoder. For example, these decoding tools and techniques may be used to enable one or more of: obtaining a video block that has unequal width and height of the video block; determining an intra prediction mode that is applicable to the video block; determining a partition type of the video block based on the width of the video block and the height of the video block; partitioning, based on the partition type, the video block into a first partition of the video block and a second partition of the video block and determining that the first partition of the video block is to be predicted using a horizontal or vertical intra prediction mode; predicting the first partition of the video block using the horizontal or vertical intra prediction mode and the second partition of the video block using the intra prediction mode that is applicable to the video block (e.g., the intra prediction mode that is applicable to the video block may not be the horizontal or vertical intra prediction mode); decoding the video block based on the first partition of the video block and the second partition of the video block; receiving a partition indicator that indicates that the video block (e.g., that has the unequal width and height) is to be partitioned based on the width of the video block and the height of the video block; receiving a prediction scheme indicator that indicates whether a vertical intra prediction mode or a horizontal intra prediction mode is to be used to predict the first partition of the video block; predicting the first partition of the video block according to the prediction scheme indicator; determining, based on the partition type of the video block, whether a vertical intra prediction mode or a horizontal intra prediction mode is to be used to predict the first partition of the video block; predicting the first partition of the video block according to the determination of whether the vertical intra prediction mode or the horizontal intra prediction mode is to be used to predict the first partition of the video block; determining that one of TIMD, DIMD, MRL, MIP, MPM, or TMRL is enabled for the video block; determining the intra prediction mode that is applicable to the video block based on the enabled one of the TIMD, DIMD, MRL, MIP, MPM, or TMRL; receiving a partition indicator indicating that the video block (e.g., one that has the unequal width and height) is to be partitioned based on the width of the video block and the height of the video block, determining that only a vertical intra prediction mode may be permitted for the first partition of the video block and/or predicting the first partition of the video block using the vertical intra prediction mode; partitioning the video block symmetrically into the first partition and the second partition of the video block; partitioning the video block asymmetrically into the first partition and the second partition of the video block; determining a prediction of the video block based on the prediction of the first partition of the video block and the prediction of the second partition of the video block; decoding a residual coefficient associated with the video block; applying the decoded residual coefficient to the prediction of the video block; determining the prediction of the video block as a simple average or a weighted average of the prediction of the first partition of the video block and the prediction of the second partition of the video block; determining the partition type of the video block to be a horizontal partition type based on the height of the video block being greater than the width of the video block; etc.

An encoder may partition a video block into a first partition of the video block and a second partition of the video block and predict the first partition of the video block using a horizontal or vertical intra prediction mode (e.g., as determined based on a partition type of the video block or based on RD performance of the horizontal or vertical intra prediction mode) and the second partition of the video block using the intra prediction mode that is determined to be applicable to the video block. Encoding tools and techniques (e.g., as illustrated in FIG. 2) including one or more of quantization, entropy coding, inverse quantization, inverse transformation, and differential coding may be used to enable one or more examples as described herein in the encoder. For example, these encoding tools and techniques may be used to enable one or more of: obtaining a video block that has unequal width and height of the video block; determining an intra prediction mode that is applicable to the video block; determining a partition type of the video block based on the width of the video block and the height of the video block; partitioning, based on the partition type, the video block into a first partition of the video block and a second partition of the video block and determining that the first partition of the video block is to be predicted using a horizontal or vertical intra prediction mode; predicting the first partition of the video block using the horizontal or vertical intra prediction mode and the second partition of the video block using the intra prediction mode that is applicable to the video block. (e.g., the intra prediction mode that is applicable to the video block may not be the horizontal or vertical intra prediction mode); encoding the video block based on the first partition of the video block and the second partition of the video block; sending a partition indicator that indicates that the video block (e.g., that has the unequal width and height) is to be partitioned based on the width of the video block and the height of the video block; sending a prediction scheme indicator that indicates whether a vertical intra prediction mode or a horizontal intra prediction mode is to be used to predict the first partition of the video block; predicting the first partition of the video block according to the prediction scheme indicator;

determining, based on the partition type of the video block, whether a vertical intra prediction mode or a horizontal intra prediction mode is to be used to predict the first partition of the video block; predicting the first partition of the video block according to the determination of whether the vertical intra prediction mode or the horizontal intra prediction mode is to be used to predict the first partition of the video block; determining that one of TIMD, DIMD, MRL, MIP, MPM, or TMRL is enabled for the video block; determining the intra prediction mode that is applicable to the video block based on the enabled one of the TIMD, DIMD, MRL, MIP, MPM, or TMRL; determining that only a vertical intra prediction mode may be permitted for the first partition of the video block, predicting the first partition of the video block using the vertical intra prediction mode, and/or sending a partition indicator indicating that the video block (e.g., one that has the unequal width and height) is to be partitioned based on the width of the video block and the height of the video block; partitioning the video block symmetrically into the first partition and the second partition of the video block; partitioning the video block asymmetrically into the first partition and the second partition of the video block; determining a prediction of the video block based on the prediction of the first partition of the video block and the prediction of the second partition of the video block; sending a residual coefficient associated with the video block; determining the prediction of the video block as a simple average or a weighted average of the prediction of the first partition of the video block and the prediction of the second partition of the video block; determining the partition type of the video block to be a horizontal partition type based on the height of the video block being greater than the width of the video block; determining the partition type of the video block to be a vertical partition type based on the width of the video block being greater than the height of the video block; evaluating a first prediction (e.g., a prediction of the first partition of the video block using the horizontal or vertical intra prediction mode and the second partition of the video block using the intra prediction mode that is applicable to the video block against a second prediction of the video block (e.g., a prediction of the video block without a partition);determining that the first prediction is to be used to encode the video block and/or sending a partition indicator that indicates that the video block (e.g., that has the unequal width and height) is to be partitioned based on the width of the video block and the height of the video block; etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A device for video decoding, comprising:
   a processor configured to:

   obtain a video block, wherein a width of the video block and a height of the video block are not equal;
   determine an intra prediction mode that is applicable to the video block;
   determine a partition type of the video block based on the width of the video block and the height of the video block;
   partition, based on the partition type, the video block into a first partition of the video block and a second partition of the video block, wherein the first partition of the video block is to be predicted using a horizontal or vertical intra prediction mode;
   predict the first partition of the video block using the horizontal or vertical intra prediction mode and the second partition of the video block using the intra prediction mode that is applicable to the video block, wherein the intra prediction mode that is applicable to the video block is not the horizontal or vertical intra prediction mode; and
   decode the video block based on the first partition of the video block and the second partition of the video block.

2. A device for video encoding, comprising:
   a processor configured to:

   obtain a video block, wherein a width of the video block and a height of the video block are not equal;
   determine an intra prediction mode that is applicable to the video block;
   determine a partition type of the video block based on the width of the video block and the height of the video block;
   partition, based on the partition type, the video block into a first partition of the video block and a second partition of the video block, wherein the first partition of the video block is to be predicted using a horizontal or vertical intra prediction mode;

predict the first partition of the video block using the horizontal or vertical intra prediction mode and the second partition of the video block using the intra prediction mode that is applicable to the video block, wherein the intra prediction mode that is applicable to the video block is not the horizontal or vertical intra prediction mode; and encode the video block based on the first partition of the video block and the second partition of the video block.

3. The device of claim 1, wherein the processor is further configured to:

receive a partition indicator, wherein the partition indicator indicates that the video block that has the unequal width and height is to be partitioned based on the width of the video block and the height of the video block; and receive a prediction scheme indicator, wherein the prediction scheme indicator indicates whether a vertical intra prediction mode or a horizontal intra prediction mode is to be used to predict the first partition of the video block, wherein the first partition of the video block is predicted according to the prediction scheme indicator.

4. The device of claim 1 or claim 2, wherein the processor is further configured to determine, based on the partition type of the video block, whether a vertical intra prediction mode or a horizontal intra prediction mode is to be used to predict the first partition of the video block, wherein the first partition of the video block is predicted according to the determination of whether the vertical intra prediction mode or the horizontal intra prediction mode is to be used to predict the first partition of the video block.

5. The device of claim 1 or claim 2, wherein the processor is further configured to: determine that one of template based intra prediction (TIMD), decoder side intra mode derivation (DIMD), multiple reference lines (MRL), matrix based intra prediction (MIP), most probable modes (MPM), or template-based multiple reference lines (TMRL) is enabled for the video block, wherein the intra prediction mode that is applicable to the video block is determined based on the enabled one of the TIMD, DIMD, MRL, MIP, MPM, or TMRL.

6. The device of claim 1, wherein the processor is further configured to receive a partition indicator, wherein the partition indicator indicates that the video block that has the unequal width and height is to be partitioned based on the width of the video block and the height of the video block, wherein only a vertical intra prediction mode is permitted for the first partition of the video block, and the first partition of the video block is predicted using the vertical intra prediction mode.

7. The device of claim 1, wherein the video block is partitioned symmetrically into the first partition and the second partition of the video block or partitioned asymmetrically into the first partition and the second partition of the video block, and wherein the processor is further configured to:

determine a prediction of the video block based on the prediction of the first partition of the video block and the prediction of the second partition of the video block;
decode a residual coefficient associated with the video block; and
apply the decoded residual coefficient to the prediction of the video block.

8. The device of claim 7, wherein the prediction of the video block is a simple average or a weighted average of the prediction of the first partition of the video block and the prediction of the second partition of the video block.

9. The device of claim 1, wherein the partition type of the video block is determined to be a horizontal partition type based on the height of the video block being greater than the width of the video block.

10. The device of claim 2, wherein the prediction of the first partition of the video block using the horizontal or vertical intra prediction mode and the second partition of the video block using the intra prediction mode that is applicable to the video block is a first prediction, and wherein the processor is further configured to:

evaluate the first prediction against a prediction of the video block without a partition;
determine that the first prediction is to be used to encode the video block; and
send a partition indicator, wherein the partition indicator indicates that the video block that has the unequal width and height is to be partitioned based on the width of the video block and the height of the video block.

11. A method for video decoding, comprising:

obtaining a video block, wherein a width of the video block and a height of the video block are not equal;

determining an intra prediction mode that is applicable to the video block;
determining a partition type of the video block based on the width of the video block and the height of the video block;
partitioning, based on the partition type, the video block into a first partition of the video block and a second partition of the video block, wherein the first partition of the video block is to be predicted using a horizontal or vertical intra prediction mode;
predicting the first partition of the video block using the horizontal or vertical intra prediction mode and the second partition of the video block using the intra prediction mode that is applicable to the video block, wherein the intra prediction mode that is applicable to the video block is not the horizontal or vertical intra prediction mode; and
decoding the video block based on the first partition of the video block and the second partition of the video block.

12. A method for video encoding, comprising:

obtaining a video block, wherein a width of the video block and a height of the video block are not equal;
determining an intra prediction mode that is applicable to the video block;
determining a partition type of the video block based on the width of the video block and the height of the video block;
partitioning, based on the partition type, the video block into a first partition of the video block and a second partition of the video block, wherein the first partition of the video block is to be predicted using a horizontal or vertical intra prediction mode;
predicting the first partition of the video block using the horizontal or vertical intra prediction mode and the second partition of the video block using the intra prediction mode that is applicable to the video block, wherein the intra prediction mode that is applicable to the video block is not the horizontal or vertical intra prediction mode; and
encoding the video block based on the first partition of the video block and the second partition of the video block.

13. The method of claim 11, further comprising:

receiving a partition indicator, wherein the partition indicator indicates that the video block that has the unequal width and height is to be partitioned based on the width of the video block and the height of the video block; and
receiving a prediction scheme indicator, wherein the prediction scheme indicator indicates whether a vertical intra prediction mode or a horizontal intra prediction mode is to be used to predict the first partition of the video block, wherein the first partition of the video block is predicted according to the prediction scheme indicator.

14. The method of claim 11 or claim 12, wherein the method further comprises determining, based on the partition type of the video block, whether a vertical intra prediction mode or a horizontal intra prediction mode is to be used to predict the first partition of the video block, wherein the first partition of the video block is predicted according to the determination of whether the vertical intra prediction mode or the horizontal intra prediction mode is to be used to predict the first partition of the video block.

15. The method of claim 11 or claim 12, wherein the method further comprises determining that one of template based intra prediction (TIMD), decoder side intra mode derivation (DIMD), multiple reference lines (MRL), Matrix based intra Prediction (MIP), most probable modes (MPM), template-based multiple reference lines (TMRL) is enabled for the video block, wherein the intra prediction mode that is applicable to the video block is determined based on the enabled one of the TIMD, DIMD, MRL, MIP, MPM, or TMRL.

**FIG. 1A**

EP 4 637 143 A1

116

122

102

120
Transceiver

124
Speaker/
Microphone

134
Power
Source

126
Keypad

118
Processor

136
GPS
Chipset

128
Display/
Touchpad

138
Peripherals

130
Non-
Removable
Memory

132
Removable
Memory

# FIG. 1B

**FIG. 1C**

108 PSTN

110 Internet

112 Other Networks

115 Core Network

183a SMF

185a DN

183b SMF

185b DN

N11

182a AMF

184a UPF

N4

N6

N11

182b AMF

184b UPF

N4

N6

113 RAN

N2

N3

N2

N3

N2

N3

180a gNB

Xn

180b gNB

Xn

180c gNB

116

116

116

102a

102b

102c

FIG. 1D

FIG. 2

200

201 Pre-encoding processing

202 Image Partitioning

210

225 Transform

230 Quantization

240 Inverse Quantization

250 Inverse Transform

255

260 Intra prediction

245 Entropy Coding

265 In-loop Filters

280 Reference Picture Buffer

205

270 Motion Compensation

275 Motion Estimation

**300**

**FIG. 3**

EP 4 637 143 A1

**400**

**FIG. 4**

EP 4 637 143 A1

W

H

Original HxW parititon

Horizontal

Vertical

W

H/2

W/2

H

**FIG. 5**

Original HxW parititon

Horizontal

Vertical

W

H/4

W/4

H

FIG. 6

EP 4 637 143 A1

**FIG. 7**

FIG. 8

**FIG. 9**

FIG. 10

Vertical split
Right

W/4
Part 2

3W/4
Part 1

Reference
samples

H

Vertical split
Left

3W/4
Part 2

W/4
Part 1

H

FIG. 11

FIG. 12

Europäisches
Patentamt

European
Patent Office

Office européen
des brevets

# EUROPEAN SEARCH REPORT

**Application Number**

EP 24 31 5164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/008611 A1 (INTERDIGITAL CE PATENT HOLDINGS SAS [FR]) 11 January 2024 (2024-01-11) * paragraph [0191] * * paragraph [0213] - paragraph [0216] * * paragraph [0232] - paragraph [0233] * | 1-15 | INV. H04N19/119 H04N19/593 H04N19/11 H04N19/105 |
| A | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG2025 ; m66954 29 March 2024 (2024-03-29), XP030316747, Retrieved from the Internet: URL:https://jvet-experts.org/doc_end_user/documents/33_Teleconference/wg11/JVET-AG2025-v1.zip JVET-AG2025-v1.docx [retrieved on 2024-03-29] * paragraph [3.1.17] * | 1-15 | |

**TECHNICAL FIELDS SEARCHED (IPC)**

H04N

The present search report has been drawn up for all claims

| Place of search | Date of completion of the search | Examiner |
|---|---|---|
| Munich | 25 September 2024 | Di Cagno, Gianluca |

EPO FORM 1503 03.82 (P04C01)

## ANNEX TO THE EUROPEAN SEARCH REPORT
## ON EUROPEAN PATENT APPLICATION NO.

EP 24 31 5164

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2024

| Patent document cited in search report | Publication date | Patent family member(s) | Publication date |
|---|---|---|---|
| WO 2024008611 A1 | 11-01-2024 | TW 202404367 A | 16-01-2024 |
| | | WO 2024008611 A1 | 11-01-2024 |

EPO FORM P0459

For more details about this annex : see Official Journal of the European Patent Office, No. 12/82